(19) Europäisches Patentamt
European Patent Office
Office européen des brevets

(11) **EP 4 712 311 A1**

(12) **EUROPEAN PATENT APPLICATION**

(43) Date of publication:
**18.03.2026 Bulletin 2026/12**

(21) Application number: **25201168.9**

(22) Date of filing: **09.09.2025**

(51) International Patent Classification (IPC):
*H02K 1/06* (2006.01)    *H02K 15/02* (2025.01)
*H02K 15/021* (2025.01)    *H02K 1/02* (2006.01)
*H02K 1/14* (2006.01)    *B33Y 10/00* (2015.01)
*B33Y 80/00* (2015.01)

(52) Cooperative Patent Classification (CPC):
**B33Y 10/00; B33Y 80/00; H02K 1/02; H02K 1/06; H02K 15/021;** H02K 1/146; H02K 1/148

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.09.2024 EE 202400018**

(71) Applicant: **Tallinn University of Technology
19086 Tallinn (EE)**

(72) Inventors:
- **Tiismus, Hans**
  **19086 Tallinn (EE)**
- **Kallaste, Ants**
  **19086 Tallinn (EE)**
- **Vaimann, Toomas**
  **19086 Tallinn (EE)**

(74) Representative: **AAA Patendibüroo OÜ
Tartu mnt 16
10117 Tallinn (EE)**

(54) **3D-PRINTED MAGNETIC CORE OF AN ELECTRIC MACHINE AND A METHOD ITS MANUFACTURE**

(57) The present invention relates to a 3D-printed magnetic core of an electric machine and a method for its manufacture. The magnetic core comprising a multi-element assembly where the elements have trapezoidal lamellae of variable thickness with gaps of variable thickness between them such that when assembled they form a dovetail-like connection. The method for manufacturing the magnetic core element comprises an additive manufacturing using 6.5% electrical steel.

FIG. 4

**Description**

TECHNICAL FIELD

The present invention relates to electric machines, i.e. motors and generators, and their manufacture. More specifically, the present invention relates to manufacture of electric machines by 3D-printing. Still more specifically, the present invention relates to a solution of magnetic cores of an electric machine, which have low losses and high duty factor, where 3D-printing enables non-traditional shapes of the magnetic core.

BACKGROUND ART

The most common material of magnetic cores of electric machines is thin (~0.1-0.5 mm) sheets or laminations of electrical steel. These sheets are coated with a thin electrically insulating layer to minimize the eddy current losses arising during the use of the material, which constitute a major component of iron losses. Eddy current losses We are classically described in laminated material with the relationship (1), where $B_m$ is maximum flux density in the material, t is the lamination thickness, f is the frequency of change of the flux, V is the volume of the core, and $K_e$ is the coefficient depending on the properties of the material.

$$We = K_e B_m{}^2 t^2 f^2 V \qquad (1)$$

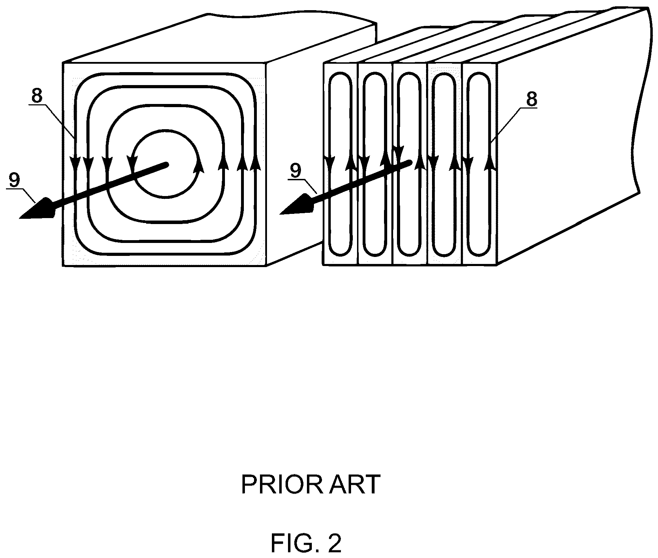

Eddy currents increase proportionally to the lamination thickness of the magnetic material, see Figure 2, and the frequency or speed of change of the field within, and its amplitude or maximum flux density. The thickness of laminations is chosen based on the application frequency, the surface effect arising in the material, which is a phenomenon related to eddy currents. It is useful to choose the lamination thickness δ proportionally to the thickness of the surface layer, according to the relationship (2), where $\rho$ is resistivity of the material, w is the angular frequency of flux change, and $\mu$ is magnetic permeability of the material. Thus, the lamination thicknesses generally remain within the range of 0.1-0.5 mm, depending on the application frequency.

$$\delta = \sqrt{\frac{2\rho}{w\mu}} \qquad (2)$$

Traditional laminations are efficient for minimizing iron losses. However, due to the production methodology, it is not practical to compose cores with a complicated design where magnetic flux would move in three spatial dimensions. The exceptional precision and flexibility of 3D-printing enables to overcome the problems of prior art in the design of electric machines and thus remarkably improve their operating characteristics. Components of an electric machine with an optimized shape, for example, enable to improve essentially their cooling, minimize electric losses, increase effective power, and improve the reliability of equipment.

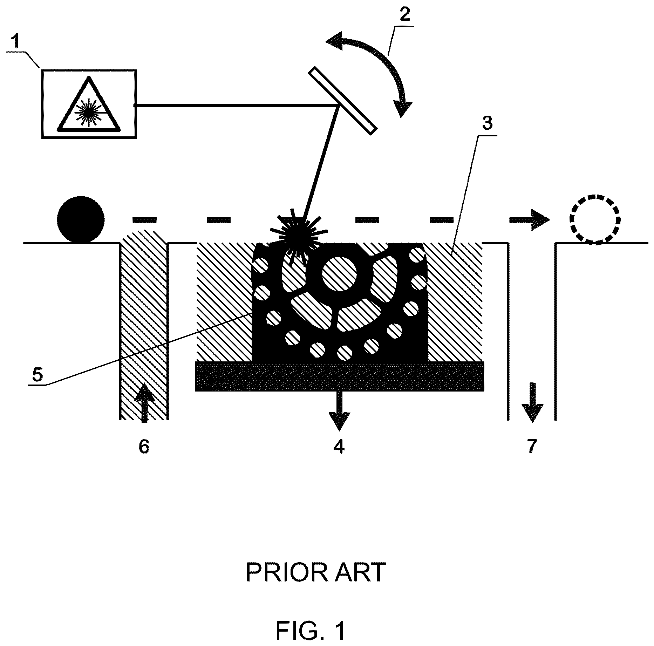

Currently, the main challenge of 3D-printed magnetic cores is the suppression of eddy current losses. The most efficient 3D-printing method of magnetic materials known from prior art is laser powder bed fusion (L-PBF), Hans Tiismus et al, State of the art of additively manufactured electromagnetic materials for topology optimized electrical machines, Additive Manufacturing, July 2022. The principle of the technology of laser powder bed fusion is provided in Figure 1. Such printing is suitable for manufacturing high-quality magnetic materials, but it does not enable to add insulating layers into the material during the process. Therefore, thin voids are 3D-printed inside the cores to achieve electrical insulation, because air is a relatively good dielectric, and taking account of the fact that there are low voltages in the core. Furthermore, such method enables to make the iron losses of printed cores equivalent to traditional laminations, with simultaneous significant reduction of duty factor, which in case of laminations is in the range 92-96%, while in printed cores it can be as low as under 50%. The large difference arises from the fact that the lower limit of printed voids in laser powder bed fusion technology is currently approximately 0.1-0.2 mm, which is in the same magnitude with the requested thickness of the magnetic conductor. For comparison, in traditional laminations the layers of dielectric lacquer are approximately 10 times thinner.

The closest solution known from the prior art is the above-mentioned magnetic core with 3D-printed voids. An example of use of such solution in research literature is provided in the article Alexander D. Goodall et al, Loss performance of an additively manufactured axial flux machine stator with an eddy-current limiting structure, materials today communications, June 2023. The duty factor of the core described in the example (65-70%) is lower than in traditional laminations. As a result, the electric machine described in the example had 23% lower torque than a comparative machine with traditional materials. In the example, relatively thick structures of magnetic conductor were used - approximately 0.5 mm, which are suitable for a magnetizing frequency of about 50-100 Hz. Higher frequencies require even smaller structures, approximately 0.15-0.2 mm at 1000 Hz, which would reduce the duty factor of the core, for example, to under 50% in the solution described in the example.

SUMMARY OF THE INVENTION

The aim of the invention is to eliminate the shortcomings of the solution known in the prior art, i.e. low duty factor of the core and low torque. The present invention is a 3D-printed magnetic core of an electric machine, which has equal duty factor with traditional analogues and the structures of which are sufficiently thin, to limit generation of eddy currents even at 1000 Hz. The 3D-printed magnetic core of the invention comprises a multi-element assembly, where the elements comprise lamellae of variable thickness. There are gaps between the said lamellae and the lamellae have a strip holding them together. The lamellae have a trapezoidal cross section of variable thickness, so that lamellae of an element can be inserted in the assembly into the gaps of lamellae of another element and vice versa, forming a dovetail-like connection. The proposed invention is mechanically more durable and enables higher duty factor than 3D-printed solutions known from prior art. The iron losses of the 3D-printed cores of the invention are within the range 20-30 W/kg (at 1T and 1000 Hz) and the duty factor is 80-90%. The said magnetic core is usable at frequencies up to 1000 Hz.

For solving the problem of eddy currents, the present invention comprises assembly of the magnetic core of several elements to minimize the reduction of effective cross section area due to air gaps, whereby the core elements are locking similarly to a dovetail, as their structure comprises thin sheets of variable thickness which are similar to traditional laminations when viewed separately. The elements have an open part which in the assembly is covered by a strip holding together the lamellae of another element, forming the closed contour of the core. The core assembly has an upper installation groove and a lower installation groove. The elements are coated with dielectric lacquer.

In addition to higher duty factor, the proposed solution enables higher mechanical durability of the core than the solution described in prior art. The dovetail structure connects the elements of the printed core into a single strong system. This is especially important, because the planned core material is electrical steel with 6.5% silicon content. From one side, the material is well known in the art for its excellent magnetic properties, mainly high magnetic permeability, low magnetostriction, low hysteresis losses, high resistivity, but from the other side for its extremely difficult mechanic properties, such as low plasticity. This is an extremely fragile material, which is subjected to countless cyclic loading in an electric motor and is prone to failure due to its thin structure.

The present invention also comprises a method for manufacturing a 3D-printed core of an electric machine. The method for manufacturing the core structure comprises the following steps:

1) 3D-printing of the elements of the magnetic core by laser powder bed fusion (L-PBF) of 6.5% electrical steel;

2) tempering of the printed elements for normalizing the stresses inside the material at temperature 600 °C;

3) mechanical post-processing of the printed elements, comprising cutting down from the platform and cleaning

4) electropolishing of the printed elements for minimizing surface roughness and increasing the duty factor;

5) annealing of the printed elements for recrystallization of the internal structure of the material;

6) coating of the printed elements with dielectric lacquer;

7) assembly of the core of the printed elements;

8) filling of defects and voids in the assembled core with dielectric lacquer in vacuum (vacuum impregnation)

BRIEF DESCRIPTION OF DRAWINGS

The above mentioned and other properties and advantages of the present invention are described in more detail below with reference to appended figures illustrating the preferred embodiments, where

Figure 1 shows a diagram of 3D-printing technology with laser powder bed fusion known from the prior art;

Figure 2 illustrates the procedure of minimizing eddy currents with thin laminate structures known from the prior art;

Figure 3 illustrates a typical 3D-printed core of an electric machine known from the prior art;

Figure 4 illustrates a scheme of a simplified assembly of a 3D-printed core of an electric machine comprising two parts according to the invention;

Figures 5, 5A, and 5B illustrate the design of a first element of a tooth of a core of a yokeless stator of an electric machine with axial flow according to the invention;

Figures 6, 6A, and 6B illustrate the design of a second element of a tooth of a core of a yokeless stator of an electric machine with axial flow according to the invention;

Figure 7 illustrates formation of a tooth of the elements of a core of a yokeless stator of an electric machine with axial flow according to the invention;

Figure 8 illustrates a tooth comprising two elements of a core of a yokeless stator of an electric machine with axial flow according to the invention;

Figure 9 illustrates a section of a tooth comprising two elements of a core of a yokeless stator of an electric machine with axial flow according to the invention.

EXAMPLES OF EMBODIMENTS

The core of a yokeless stator of an electric machine with axial flow of the invention is manufactured by laser powder bed fusion 3D-printing. Figure 1 illustrates an explanatory scheme of 3D-printing technology with laser powder bed fusion (L-PBF) known from the prior art, where the laser source 1 reflects a laser beam to a mirror system 2, which guides the laser to a given metal powder in a powder bath 3. In the powder bath 3 the powder layer is melted for melting together the powder material with laser 1. A powder feeding blade or roller coats a thin layer of powder on the construction surface, the power source melts selectively the material needed for this layer, after which the base plate 4 is lowered to make room for the next layer. Fresh powder is fed in the direction of arrow 6 and removal of excess powder is shown by arrow 7. The printed structure 5 is formed in the powder bath 3.

In order to explain the nature of the technical problem, Figure 2 illustrates schematically how eddy currents 8 are minimized, depending on the thickness of the core layer or laminate. The thicker is the core layer, shown at the left in Figure 2, the higher are the eddy currents 8 and vice versa. Eddy current 8 in thinner layers is shown in Figure 2 at the right. Direction 9 of the current is indicated with an arrow. The higher are the eddy currents, the higher are also the eddy current losses, thus an objective of the present invention is to minimize eddy current losses.

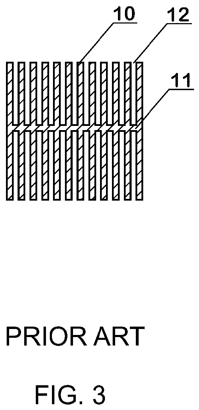

Figure 3 illustrates a typical solution of a 3D-printed core of an electric machine known from the prior art, with 3D-printed lamellae 10, a strip 11 holding the lamellae together, and a gap 12 between the lamellae, forming an insulating air layer. The strip 11 holding the lamellae 10 together is usually located in the middle of the lamellae 10, perpendicularly to the lamellae 10.

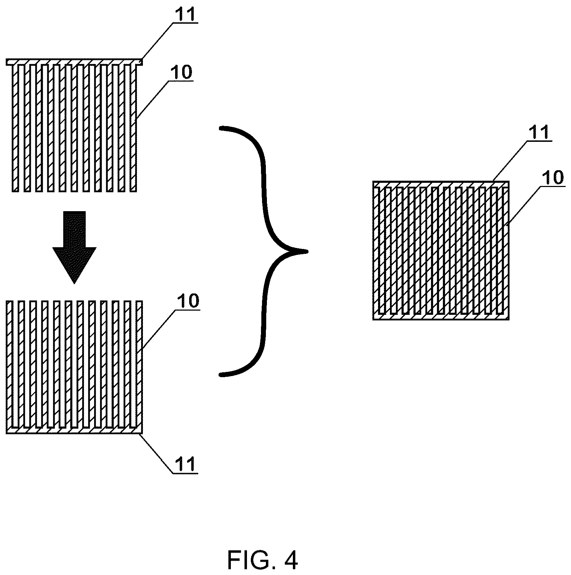

The present invention proposes a core of an electric machine comprising at least two elements, where thin lamellae can be obtained by 3D-printing. A core comprising two parts enables to minimize voids in the core. Figure 4 illustrates a simplified assembly of a 3D-printed core of an electric machine comprising two parts according to the invention. The parts of the core comprising two parts are 3D-printed so that lamellae 10 of another part fit into the gaps of the lamellae 10 of one part, together with an insulation layer. The strip 11 holding the lamellae 10 together is placed to the first and second edges of the lamellae 10 so that two parts together form a closed integral system, with low percentage of voids.

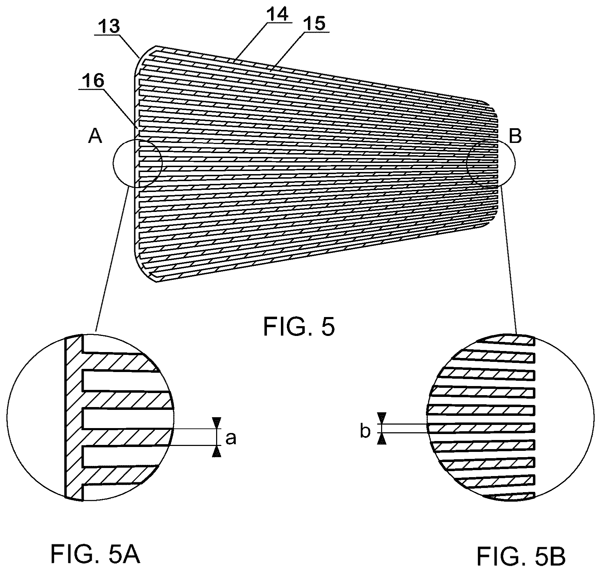

Figure 5 illustrates the design of a first element 13 of a core of a yokeless stator of an electric machine with axial flow according to the invention, a tooth of the first core half. The first element 13 has variable thickness and comprises the lamellae 14 of the first element, whereby the lamellae 14 have trapezoidal cross section. Between the lamellae 14 there are gaps 15, which are also trapezoidal. Lamellae 14 of the first element 13 are held together by the strip 16, which is 3D-printed in one piece with the lamellae 14. Lamellae 14 of the first element 13 broaden towards the strip 16 holding together the lamellae 14 (Figure 5A) and taper towards the open part (Figure 5B). The thickness of lamellae is within the range 0.1 to 0.5 mm depending on the application frequency, for 1000 Hz application the narrow part is 0.1 mm and the thick part 0.2 mm. Thickness a of the lamellae of the first element 13 at the strip holding the lamellae together is 0.2 mm and thickness b of a lamella at the open part is 0.1 mm.

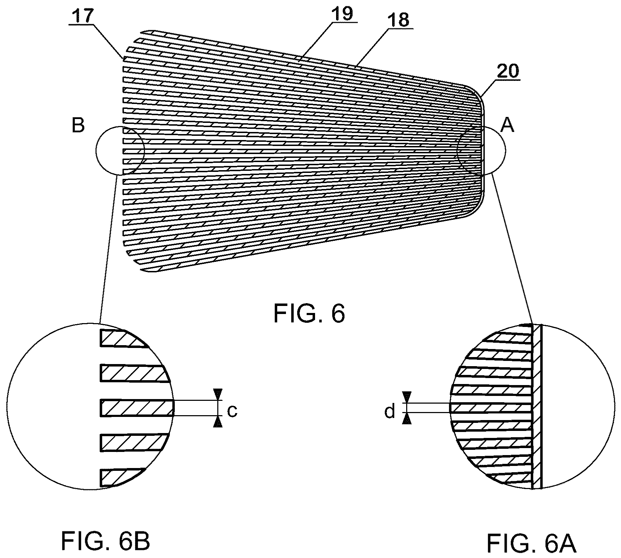

Figure 6 illustrates the design of a second element 17 of the core of the invention, the second core half. The second element 17 has variable thickness and comprises the lamellae 18 of the second element, whereby the lamellae 18 have trapezoidal cross section. Between the lamellae 18 there are gaps 19, which are also trapezoidal. Lamellae 18 of the second element 17 are held together by the strip 20, which is 3D-printed in one piece with the lamellae 18. Lamellae 18 of the second element 17 taper towards the strip 20 holding together the lamellae 18 (Figure 6A) and broaden towards the open part (Figure 6B). Thickness d of the lamellae of the second element 17 at the strip holding the lamellae together is 0.1 mm and thickness c of a lamella at the open part is 0.2 mm.

A tooth of the core halves or the first element 13 and the second element 17 is designed so that upon assembly the trapezoidal lamellae 14 of the first element 13 fit into the trapezoidal gaps 19 of the lamellae of the second element 17 and the trapezoidal lamellae 18 of the second element 17 fit into the trapezoidal gaps 15 of the lamellae 14 of the first element 13, forming a geometric lock similar to a dovetail.

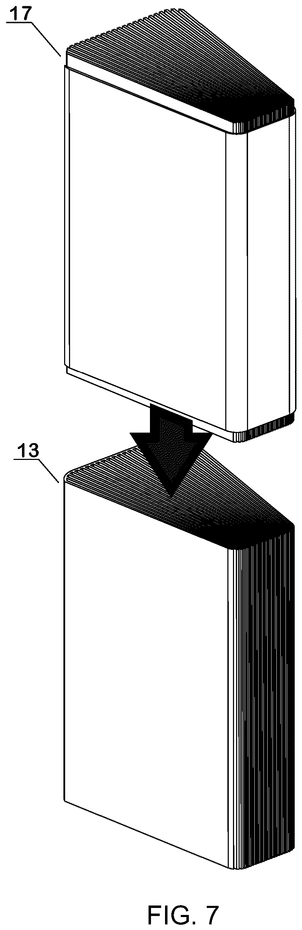

Upon assembly of a tooth of the core halves or the first and the second element (Figures 7 to 9), the strip 16 holding together the lamellae of the first element 13 covers the open part of the second element 17 and the strip 20 holding together the lamellae of the second element 17 covers the open part of the first element 13, forming a closed contour.

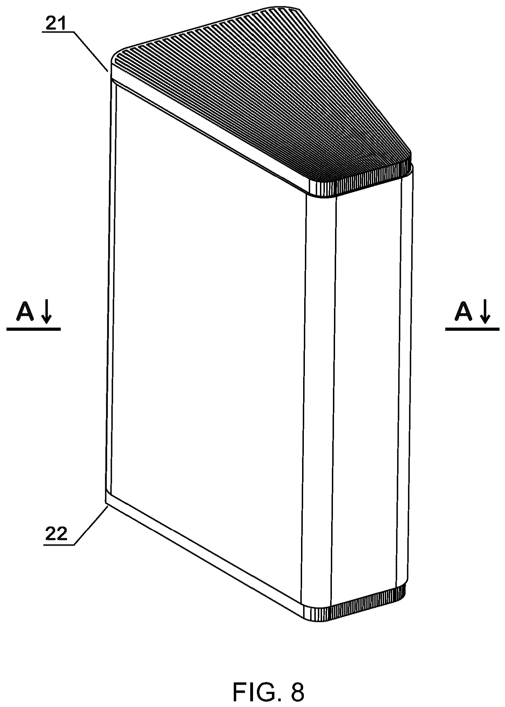

Figure 8 illustrates a tooth of a core of a yokeless stator of an electric machine with axial flow according to the invention, whereby it is assembled of the first and the second element. The assembled tooth of the core has an upper installation groove 21 and a lower installation groove 22 for installing the core in the electric machine. There are several such stator teeth in the electric machine. This example of 3D-printed motor has 24 stator teeth, whereby their sequential switching generates a rotating magnetic field, which will make the motor rotate. The height of the core depends on the specific design solution of the electric machine - i.e. the required output parameters and restrictions related to the shape/size.

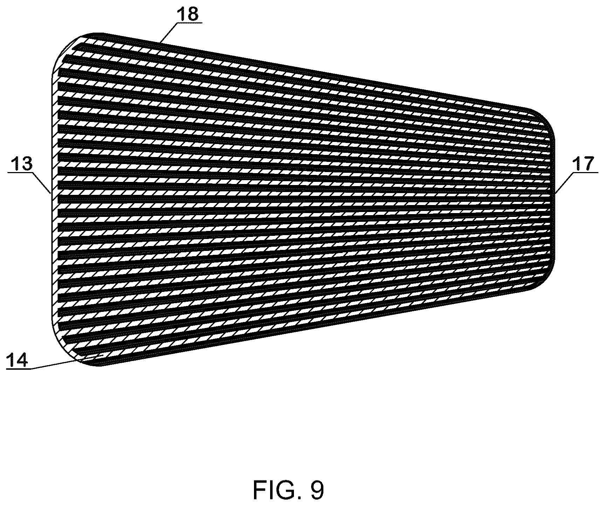

Figure 9 illustrates a section of a tooth comprising two elements of a core of a yokeless stator of an electric machine with axial flow, showing the first element 13 and its trapezoidal lamellae 14, which fit precisely into the second element 17 and between its trapezoidal lamellae 18. In Figure 9, the first element 13 is streaked and the second element 17 is black, for better legibility of the figure.

The width of the air gaps of the elements depends on the thickness of laminations, varying between 0.1 and 0.2 mm due to the peculiarities of the design. The thickness of the lacquer layer is added to the thickness of lamination, which is 10-20 $\mu$m in case of standard polyurethane-based fast-drying protective lacquers.

The method for manufacturing the core structure comprises laser 3D-printing of the halves of the magnetic core, or the first element 13 and the second element 17, of 6.5% electrical steel. The raw material and 3D-printing equipment are commercially available. Examples of the suppliers of the raw material: Sandvik AB, Höganäs AB. Suppliers of 3D-printer: SLM Solutions Group AG, EOS GmbH, Aconity3D GmbH.

The printed elements are tempered for normalizing the stresses inside the material at the temperature 600 °C, where the elements are kept for 2 hours, with heating speed 5 °C per minute, in order to avoid deformation of the elements upon their cut-down from the printing platform. After heating, the elements are allowed to cool down to the room temperature in the oven. The oven shall enable a vacuum or inert gas environment, to prevent oxidation of the elements. An oven type with graphite lining is suitable.

After tempering the elements, mechanical post-processing takes place, along with cutting down from the platform and cleaning of elements. After that, the elements are electropolished, minimizing the surface roughness, to ensure better fit of the core halves and to achieve higher duty factor.

This is followed by annealing of the elements in vacuum or inert gas, where recrystallization of internal structure of the material, i.e. formation of large crystallographic grains takes place. This requires higher temperatures than tempering: the elements are heated at 5 °C/min to the temperature 1200 °C, where they are kept for 1 hour and then allowed to cool slowly in the chamber to the room temperature. In such way, magnetic properties of the printed elements are improved.

After annealing, the core elements are coated with a layer of dielectric lacquer. Then, the elements are dipped in a lacquer bath and allowed to dry in air. Suitable lacquers are standard polyurethane-based single-component fast drying insulating and protective lacquers for electric and electronic equipment.

Lacquered elements of a tooth of the core of the stator are assembled, after which the remaining defects/voids are filled in vacuum with dielectric lacquer (vacuum impregnation).

After that, the stator assembly of the electric machine is assembled, which depending on the design of the specific motor comprises dozens 3D-printed stator teeth, between which a coil is installed, and which are installed in the electric machine.

## Claims

1. A 3D-printed magnetic core of an electric machine, **characterized in that** the core comprises a multi-element (13, 17) assembly, where the elements (13, 17) comprise lamellae (10, 14, 18) of variable thickness, whereby there are gaps (15, 19) between the lamellae (10, 14, 18), and a strip (11, 16, 20) holding the lamellae (10, 14, 18) together, whereby the lamellae (14, 18) of variable thickness have trapezoidal cross section, so that the lamellae (10, 14, 18) of one element (13, 17) are fitted in the assembly into the gaps (15, 19) of the lamellae (10, 14, 18) of another element (13, 17) and vice versa.

2. The 3D-printed magnetic core of an electric machine according to claim 1, **characterized in that** the element (13, 17) has an open part, which in the assembly is covered by the strip (11, 16, 20) of another element (13, 17) holding the lamellae together, forming a closed contour.

3. The 3D-printed magnetic core of an electric machine according to claim 1, **characterized in that** the core assembly has an upper installation groove (21) and a lower installation groove (22).

4. The 3D-printed magnetic core of an electric machine according to claim 1, **characterized in that** the elements (13, 17) of the core are coated with dielectric lacquer.

5. The 3D-printed magnetic core of an electric machine according to claim 1, **characterized in that** the core is usable at frequencies up to 1000 Hz.

6. A method for manufacturing a 3D-printed core of an electric machine according to claim 1, **characterized by** the method comprising:

> 3D-printing of the elements of the magnetic core by laser powder bed fusion (L-PBF) of electrical steel;
> tempering of the printed elements;
> mechanical post-processing of the printed elements;
> electropolishing of the printed elements;
> annealing of the printed elements;
> coating of the printed elements with dielectric lacquer;
> assembly of the core of the printed elements;
> filling of defects and voids in the assembled core with dielectric lacquer in vacuum.

7. The method according to claim 6, **characterized in that** the electrical steel is 6.5% electrical steel.

8. The method according to claim 6, **characterized in that** tempering takes place at the temperature 600 °C.

9. The method according to claim 6, **characterized in that** mechanical post-processing includes cutting down from the platform and cleaning.

PRIOR ART

FIG. 1

PRIOR ART

FIG. 2

PRIOR ART

FIG. 3

FIG. 4

FIG. 5

FIG. 5A

FIG. 5B

FIG. 6

FIG. 6B

FIG. 6A

FIG. 7

21

22

A↓

A↓

FIG. 8

FIG. 9

EP 4 712 311 A1

<table>
<tr><td colspan="2" rowspan="2"></td><td>Europäisches<br>Patentamt</td><td rowspan="2">EUROPEAN SEARCH REPORT</td><td>Application Number</td></tr>
<tr><td>European<br>Patent Office<br>Office européen<br>des brevets</td><td>EP 25 20 1168</td></tr>
</table>

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TIISMUS HANS ET AL: "Additive Manufacturing and Performance of E-Type Transformer Core", ENERGIES, vol. 14, no. 11, 1 January 2021 (2021-01-01), pages 1-14, XP093320191, CH ISSN: 1996-1073, DOI: 10.3390/en14113278 * abstract; figure 2 * * page 3, first full paragraph * ----- | 1-9 | INV.<br>H02K1/06<br>H02K15/02<br>H02K15/021<br>H02K1/02<br>H02K1/14<br>B33Y10/00<br>B33Y80/00 |
| A | WO 2024/115315 A1 (AMPERE SAS [FR]) 6 June 2024 (2024-06-06) * figures 1,7,9-12 * ----- | 1-9 | |
| A | US 2018/254680 A1 (SAKURAI JUN [JP] ET AL) 6 September 2018 (2018-09-06) * figure 8b * * paragraphs [0063] - [0065] * ----- | 1-9 | |
| A | US 5 649 349 A (GREENWAY GLENN W [US]) 22 July 1997 (1997-07-22) * figures 4-6 * ----- | 1-9 | TECHNICAL FIELDS SEARCHED (IPC)<br><br>B33Y<br>H02K |

The present search report has been drawn up for all claims

| Place of search | Date of completion of the search | Examiner |
|---|---|---|
| The Hague | 14 January 2026 | Güvener, Cem |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

## ANNEX TO THE EUROPEAN SEARCH REPORT
## ON EUROPEAN PATENT APPLICATION NO.

EP 25 20 1168

14-01-2026

| Patent document cited in search report | Publication date | Patent family member(s) | | Publication date |
|---|---|---|---|---|
| WO 2024115315 A1 | 06-06-2024 | EP | 4626703 A1 | 08-10-2025 |
| | | FR | 3142367 A1 | 31-05-2024 |
| | | WO | 2024115315 A1 | 06-06-2024 |
| US 2018254680 A1 | 06-09-2018 | CN | 107925294 A | 17-04-2018 |
| | | EP | 3425773 A1 | 09-01-2019 |
| | | JP | 6739514 B2 | 12-08-2020 |
| | | JP | WO2017149685 A1 | 19-07-2018 |
| | | KR | 20180114545 A | 18-10-2018 |
| | | KR | 20190141018 A | 20-12-2019 |
| | | TW | 201733251 A | 16-09-2017 |
| | | US | 2018254680 A1 | 06-09-2018 |
| | | WO | 2017149685 A1 | 08-09-2017 |
| US 5649349 A | 22-07-1997 | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HANS TIISMUS et al.** State of the art of additively manufactured electromagnetic materials for topology optimized electrical machines. *Additive Manufacturing*, July 2022

- **ALEXANDER D. GOODALL et al.** Loss performance of an additively manufactured axial flux machine stator with an eddy-current limiting structure. *materials today communications*, June 2023